# DEMANDE DE BREVET EUROPEEN

(11) **EP 2 676 843 A1**
(43) Date de publication de la demande: **25.12.2013**
(21) Numéro de dépôt: 13173020.2
(22) Date de dépôt: 20.06.2013
(51) Int. Cl.: B60Q 3/02

(54) **Dispositif d'éclairage individuel de siège de véhicule**

(30) Priorité: 21.06.2012 FR 1255866
(71) Demandeur: Precilec, 89000 Auxerre (FR)
(72) Inventeur: Ehrmann, Charles, 36100 Issoudun (FR); Roy, Philippe, 36260 Diou (FR); Gordiet, Pascal, 18100 Saint Georges sur la Pree (FR)
(74) Mandataire: Blot, Philippe Robert Emile

(57) **Abrégé**

L'invention concerne un dispositif (20) d'éclairage individuel pour siège de véhicule comprenant:
- une pluralité de sources lumineuses (S1, S2, S3) ayant une intensité lumineuse réglable et émettant chacune selon une direction (D1, D2, D3) privilégiée,

au moins deux sources (S1, S2, S3) étant agencées pour que les directions (D1, D2, D3) de ces deux sources (S1, S2, S3) soient non parallèles.

## Description

La présente invention concerne un dispositif d'éclairage individuel pour siège de véhicule. La présente invention se rapporte également à un siège comportant le dispositif. L'invention se rapporte notamment au domaine de l'aéronautique civile et concerne en particulier un avion comprenant le siège.

En première classe, les sièges des avions civils permettent aux passagers de bénéficier de dispositifs d'éclairage individuel. Un dispositif comprend généralement une ou plusieurs sources lumineuses qui sont ajustables en direction. Ainsi, la position de la zone éclairée par la lumière produite par le dispositif est modifiable pour répondre aux différents besoins du passager. La lecture est un de ces besoins. De ce fait, les sources lumineuses sont parfois désignées sous le nom anglais de « reading light » qui peut être traduit par « lumière de lecture » ou « liseuse ».

II est connu que l'ajustement de la direction des sources lumineuses soit obtenu à l'aide d'un mécanisme permettant la rotation et/ou la translation de la source lumineuse. Le mécanisme est usuellement actionné manuellement par le passager.

Mais, ce mécanisme doit pouvoir supporter les contraintes de l'aviation civile, notamment en terme de fiabilité. Ceci est rendu d'autant plus difficile que le mécanisme est manipulé par un nombre important de passagers, ce qui implique d'augmenter encore plus la robustesse du mécanisme. Ceci induit des coûts importants. En outre, le mécanisme est souvent encombrant.

Ainsi, il existe un besoin pour un dispositif d'éclairage individuel pour siège de véhicule qui soit plus robuste.

Selon l'invention, ce but est atteint par un dispositif d'éclairage individuel pour siège de véhicule comprenant une pluralité de sources lumineuses ayant une intensité lumineuse réglable et émettant chacune selon une direction privilégiée, au moins deux sources étant agencées pour que les directions de ces deux sources soient non parallèles.

Suivant des modes de réalisation particuliers, le dispositif d'éclairage comprend une ou plusieurs des caractéristiques suivantes, prise(s) isolément ou suivant toutes les combinaisons techniquement possibles :
- la pluralité de sources lumineuses est agencée pour que, pour chaque source, la direction privilégiée soit non parallèle aux directions des autres sources.
- chaque source de la pluralité de sources lumineuses est adaptée à émettre un faisceau lumineux, au moins deux sources étant agencées pour que les faisceaux émis par les deux sources aient une zone d'intersection.
- la pluralité de sources lumineuses est agencée pour que, pour chaque source, le faisceau lumineux émis ait au moins une zone d'intersection avec les faisceaux lumineux émis par les autres sources.
- un contrôleur adapté à faire varier l'intensité lumineuse de chaque source lumineuse de manière indépendante.
- le contrôleur est adapté à faire varier l'intensité lumineuse de chaque source lumineuse de manière continue.
- le contrôleur est adapté à faire varier l'intensité lumineuse de chaque source de manière discrète.
- le contrôleur comporte une interface avec le passager, l'interface étant adaptée à recevoir des ordres du passager et à les transmettre au contrôleur.
- le contrôleur comporte deux modes de fonctionnement : un mode automatique, dans lequel l'interface est adaptée à recevoir des ordres d'éclairage d'une zone et le contrôleur est adapté à régler l'intensité lumineuse de chaque source lumineuse en fonction des ordres reçus, et un mode manuel, dans lequel l'interface est adaptée à recevoir des ordres de modification de l'intensité lumineuse de chaque source lumineuse et le contrôleur est adapté à régler l'intensité lumineuse de chaque source lumineuse en fonction des ordres reçus.

L'invention concerne aussi un siège de véhicule comportant le dispositif précédemment décrit.

En outre, l'invention a également pour objet un avion comportant au moins un siège tel que précédemment décrit.

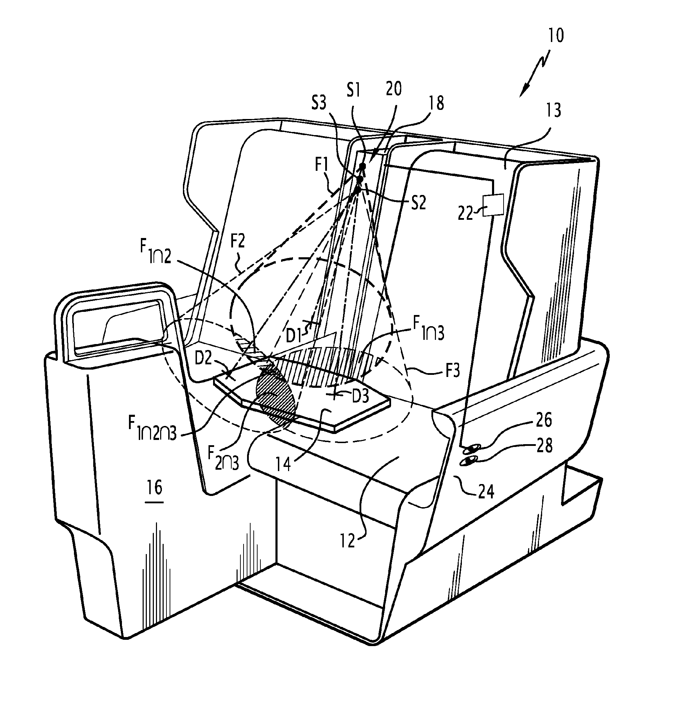

D'autres caractéristiques et avantages de l'invention apparaîtront à la lecture de la description détaillée qui suit de modes de réalisation de l'invention, donnés à titre d'exemple uniquement et en référence au dessin sur lequel la figure 1 est une vue en perspective d'un siège d'avion équipé du dispositif d'éclairage individuel selon l'invention.

Dans l'exemple proposé selon la figure 1, il est représenté un siège 10 d'avion. Néanmoins, il est entendu que l'invention à tout de type de siège de véhicule.

Le siège 10 comporte une assise 12 pour passager et un dossier 13, l'assise 12 et le dossier 13 assurant que le passager soit confortablement installé durant le voyage.

Le siège 10 comprend également une table 14 rétractable servant notamment pour supporter les plateaux repas. Le siège 10 comprend également d'autres équipements 16 non détaillés comme des rangements.

Le siège 10 est muni d'une console 18 séparant l'assise des autres équipements 16. Selon l'exemple de la figure 1, la console 18 est une bande latérale parallèle au dossier 13. La console 18 est équipée d'un dispositif 20 d'éclairage individuel. Le dispositif 20 est ainsi adapté à éclairer l'environnement du passager et, en particulier la table 14.

Selon un autre mode de réalisation, le dispositif 20 est positionné à un autre endroit de l'environnement du passager, comme dans le plafond ou un coffre à bagages par exemple.

Le dispositif 20 comporte trois sources lumineuses adaptées à émettre un faisceau lumineux : la première source S1, la deuxième source S2 et la troisième source S3. A titre d'exemple, les trois sources S1, S2 et S3 de la figure 1 sont identiques.

Selon un mode de réalisation, les sources lumineuses S1, S2 et S3 sont des diodes électroluminescentes. De telles sources présentent l'avantage d'offrir un faible encombrement tout en permettant un éclairement suffisant de la scène pour une alimentation en courant relativement faible.

Chaque source S1, S2 et S3 émet selon une direction privilégiée. Ainsi, la première source émet selon une première direction D1, la deuxième source selon une deuxième direction D2 et la troisième source selon une troisième direction D3.

La direction D privilégiée d'une source S est la direction selon laquelle l'intensité lumineuse est la plus élevée.

Lorsque la source S produit un faisceau lumineux symétrique, la direction D privilégiée correspond à la direction située au centre du faisceau lumineux émis par la source S. Ainsi, le faisceau lumineux émis par chacune des sources S1, S2 et S3 éclaire un volume symétrique représenté schématiquement sous la forme d'un cône selon la figure 1. Un premier cône correspond au faisceau F1 émis par la source S1, un deuxième cône correspond au faisceau F2 émis par la source S2 et un troisième cône correspond au faisceau F3 émis par la source S3. Dans ce cas, la hauteur du cône considéré constitue la direction privilégiée pour la source considérée.

Selon l'exemple de la figure 1, les sources S1, S2 et S3 sont agencées pour que pour chaque source, la direction privilégiée soit non parallèle aux directions privilégiées des autres sources. Plus précisément, cela signifie que la première direction D1 n'est pas parallèle à la deuxième direction D2, que la deuxième direction D2 n'est pas parallèle à la troisième direction D3 et que la troisième direction D3 n'est pas parallèle à la première direction D1.

Dans la configuration de la figure 1, les trois sources lumineuses S1, S2 et S3 sont également agencées pour que, pour chaque source, le faisceau lumineux émis ait au moins une zone d'intersection avec les faisceaux lumineux émis par les autres sources. Ainsi, le premier faisceau F1 et le deuxième faisceau F2 ont une zone d'intersection F_{1∩2}; le deuxième faisceau F2 et le troisième faisceau F3 ont une zone d'intersection F_{2∩3} et le troisième faisceau F3 et le premier faisceau F1 ont une zone d'intersection F_{3∩1}.

De plus, pour le cas de la figure 1, les zones d'intersection F_{1∩2}, F_{2∩3} et F_{3∩1} ont une intersection non nulle dans l'espace. Cette intersection notée F_{1∩2∩3} correspond à une zone de l'espace qui est éclairée par les trois faisceaux F1, F2 et F3 à la fois.

En outre, les trois sources S1, S2 et S3 ont une intensité lumineuse réglable. De préférence, l'intensité lumineuse est réglable de manière indépendante pour chaque source S1, S2 et S3.

Selon l'exemple de la figure 1, l'intensité lumineuse des trois sources est contrôlée par un contrôleur 22. Le contrôleur 22 est, selon ce mode de réalisation, une électronique dédiée couplée à un calculateur.

Selon un mode de réalisation, le contrôleur 22 est adapté à faire varier l'intensité lumineuse de chaque source lumineuse S1, S2 et S3 de manière indépendante. Cela signifie que le contrôleur 22 exerce un contrôle individualisé sur l'intensité lumineuse de chaque source lumineuse S1, S2 et S3.

Selon un mode de réalisation, le contrôleur 22 est adapté à faire varier l'intensité lumineuse de chaque source lumineuse S1, S2 et S3 de manière discrète, entre au moins trois valeurs. Ainsi, par exemple, pour la source lumineuse S1, les trois valeurs sont une valeur d'intensité lumineuse maximale Vₘₐₓ, une valeur d'intensité lumineuse minimale Vₘᵢₙ (source S1 non allumée à titre d'illustration) et une valeur d'intensité lumineuse intermédiaire Vᵢₙₜ comprise entre 10% de la valeur d'intensité lumineuse maximale Vₘₐₓ et 90% de la valeur d'intensité lumineuse maximale Vₘₐₓ.

Dans le cas de la figure 1, le contrôleur 22 est adapté à faire varier l'intensité lumineuse de chaque source lumineuse S1, S2 et S3 de manière continue entre une valeur d'intensité lumineuse minimale Vₘᵢₙ et une valeur maximale de l'intensité lumineuse de chaque source Vₘₐₓ. A titre d'exemple, selon les modes de réalisation, Vₘᵢₙ est nulle ou correspond à 10% de la valeur d'intensité lumineuse maximale ; Vₘₐₓ est la valeur maximale de l'intensité lumineuse que peut délivrer la source considérée ou correspond à 10% de la valeur d'intensité lumineuse maximale.

Dans le cas de la figure 1, le contrôleur 22 comporte une interface 24 avec le passager. Cette interface 24 se présente sous la forme d'un clavier.

L'interface 24 est adaptée à recevoir des ordres du passager et à les transmettre au contrôleur 22. Cette interface 24 sert d'interface de commande pour que le passager puisse commander la direction du faisceau du dispositif 20.

En fonctionnement, le contrôleur 22 de la figure 1 comporte deux modes de fonctionnement : un mode automatique et un mode manuel.

Dans le mode manuel, le passager entre des ordres dans l'interface pour modifier de l'intensité lumineuse de chaque source lumineuse S1, S2 et S3. Dans ce cas, le contrôleur 22 exécute les ordres de modifications entrés par le passager.

Dans le mode automatique, le passager entre des ordres dans l'interface 24 pour éclairer une zone en particulier selon son besoin. Dans le cas de la figure 1, l'interface 24 présente deux boutons 26 et 28, un bouton 26 dédié au contrôle du faisceau du dispositif 20 dans une direction et un bouton 28 dédié au contrôle du faisceau du dispositif 20 dans la direction perpendiculaire. Cela permet d'orienter le faisceau du dispositif 20 selon les souhaits du passager.

En fonction des ordres reçus, le calculateur calcule l'intensité lumineuse de chaque source lumineuse S1, S2 et S3 qui est la mieux adaptée pour la situation. Le contrôleur 22 impose alors l'intensité lumineuse la mieux adaptée à chaque source lumineuse S1, S2 et S3. De cette manière, il en résulte pour le passager un faisceau orienté selon ses souhaits.

Dans le cas de la figure 1, la configuration choisie permet d'éclairer la table 14 pour que le passager puisse manger.

Ainsi, la zone illuminée par le dispositif 20 d'éclairage change sans utilisation de mécanisme de positionnement des sources S1, S2 et S3. Les sources S1, S2 et S3 sont fixes et seules l'intensité lumineuse de ces sources S1, S2 et S3 varie. Ceci rend le dispositif 20 plus robuste tout en garantissant un bon confort pour le passager.

## Revendications

1. Dispositif (20) d'éclairage individuel pour siège de véhicule comprenant :
- une pluralité de sources lumineuses (S1, S2, S3) ayant une intensité lumineuse réglable et émettant chacune selon une direction (D1, D2, D3) privilégiée,
au moins deux sources étant agencées pour que les directions (D1, D2, D3) de ces deux sources soient non parallèles.

2. Dispositif selon la revendication 1, dans lequel la pluralité de sources lumineuses (S1, S2, S3) est agencée pour que, pour chaque source (S1, S2, S3), la direction (D1, D2, D3) privilégiée soit non parallèle aux directions des autres sources (S1, S2, S3).

3. Dispositif selon la revendication 1 ou 2, dans lequel chaque source (S1, S2, S3) de la pluralité de sources lumineuses (S1, S2, S3) est adaptée à émettre un faisceau (F1, F2, F3) lumineux, au moins deux sources étant agencées pour que les faisceaux (F1, F2, F3) émis par les deux sources aient une zone d'intersection (F_{1∩2}, F_{2∩3}, F_{3∩1}).

4. Dispositif selon la revendication 3, dans lequel la pluralité de sources (S1, S2, S3) lumineuses est agencée pour que, pour chaque source (S1, S2, S3), le faisceau (F1, F2, F3) lumineux émis ait au moins une zone d'intersection (F_{1∩2}, F_{2∩3}, F_{3∩1}) avec les faisceaux (F1, F2, F3) lumineux émis par les autres sources (S1, S2, S3).

5. Dispositif selon l'une quelconque des revendications 1 à 4 comportant en outre :
- un contrôleur (22) adapté à faire varier l'intensité lumineuse de chaque source (S1, S2, S3) lumineuse de manière indépendante.

6. Dispositif selon la revendication 5 dans lequel le contrôleur (22) est adapté à faire varier l'intensité lumineuse de chaque source (S1, S2, S3) lumineuse de manière continue ou de manière discrète.

7. Dispositif selon la revendication 5 ou 6, dans lequel le contrôleur (22) comporte une interface (24) avec le passager, l'interface (24) étant adaptée à recevoir des ordres du passager et à les transmettre au contrôleur (22).

8. Dispositif selon la revendication 7, dans lequel le contrôleur (22) comporte deux modes de fonctionnement :
- un mode automatique, dans lequel l'interface (24) est adaptée à recevoir des ordres d'éclairage d'une zone et le contrôleur (22) est adapté à régler l'intensité lumineuse de chaque source (S1, S2, S3) lumineuse en fonction des ordres reçus, et
- un mode manuel, dans lequel l'interface (24) est adaptée à recevoir des ordres de modification de l'intensité lumineuse de chaque source (S1, S2, S3) lumineuse et le contrôleur (22) est adapté à régler l'intensité lumineuse de chaque source (S1, S2, S3) lumineuse en fonction des ordres reçus.

9. Siège (10) de véhicule comportant le dispositif (20) selon l'une quelconque des revendications 1 à 8.

10. Avion comportant au moins un siège (10) selon la revendication 9.
